# FASCICULE DE BREVET EUROPEEN

(11) **EP 4 195 343 B1**
(45) Date de publication et mention de la délivrance du brevet: **18.09.2024**
(21) Numéro de dépôt: 22210081.0
(22) Date de dépôt: 29.11.2022
(51) Int. Cl.: B60P 7/08, H01M 10/04, H01M 50/209, H01M 50/264, H01M 50/267

(54) **DISPOSITIF ET PROCÉDÉ DE CONTENTION POUR MODULE D' ACCUMULATEUR ÉLECTROCHIMIQUE PRISMATIQUE À CHARRIOT DE SERRAGE ET VERROU**
KOMPRESSIONSVORRICHTUNG UND -VERFAHREN FÜR PRISMATISCHE ELEKTROCHEMISCHE SPEICHERBATTERIE MIT KLEMMWAGEN UND RIEGEL
RETENTION DEVICE AND METHOD FOR PRISMATIC ELECTROCHEMICAL ACCUMULATOR MODULE WITH CLAMPING CARRIAGE AND LOCK

(30) Priorité: 30.11.2021 FR 2112772
(43) Date de publication de la demande: 14.06.2023
(73) Titulaire: Commissariat à l'énergie atomique et aux énergies alternatives, 75015 Paris (FR)
(72) Inventeur: DREVARD, Pascal, 38054 GRENOBLE cedex 09 (FR); DE PAOLI, Lionel, 38054 GRENOBLE Cedex 09 (FR); MEE, Fabrice, 38054 GRENOBLE cedex 09 (FR)
(74) Mandataire: INNOV-GROUP

(56) Documents cités:
- EP-A1- 2 339 665
- CN-A- 113 206 280
- JP-A- 2003 323 874
- US-A1- 2005 208 362

## Description

### DOMAINE TECHNIQUE

L'invention concerne le domaine du stockage d'énergie électrique et vise les techniques de contention nécessaires pour la mise en oeuvre des accumulateurs électrochimiques prismatiques, qu'ils soient embarqués dans des véhicules ou stationnaires.

### ART ANTÉRIEUR

Certaines batteries d'accumulateurs électrochimiques présentent une forme prismatique et comportent des cellules agencées dans des contenants souples ou rigides. Ces batteries nécessitent l'application d'une force de compression sur leurs faces latérales afin d'empêcher la délamination des couches internes des cellules d'accumulateurs, ce qui dégraderait la durée de vie et les performances de ces accumulateurs. En effet, ce type d'accumulateur se déforme en conditions d'utilisation, ce qui en fin de vie entraine des gonflements d'environ 5 à 20 % des cellules constituant l'accumulateur. Une déformation non maitrisée engendre une dégradation de celles-ci dans le temps, pouvant aller jusqu'à leur destruction.

Le problème technique relatif à la nécessité d'une contention de ces accumulateurs électrochimiques est bien connu et de nombreuses solutions de contention existent dans l'art antérieur.

La demande de brevet US8054041 décrit un dispositif de contention pour accumulateur électrochimique, comportant une sangle et un dispositif de mise en tension de type ridoir permettant de rapprocher par serrage les deux extrémités de la sangle et exercer ainsi une contention sur l'accumulateur.

La demande de brevet FR2963484 décrit des moyens mécaniques de mise en contention consistant en des tirants transversaux au module d'accumulateur et adaptés à serrer mutuellement deux plaques de contention appliquées sur les faces latérales du module. Ces tirants peuvent être soudés ou vissés sur les plaques latérales. Ces solutions permettent d'exercer une force de serrage plus importante que les solutions impliquant une sangle et sont donc plus adaptées aux accumulateurs électrochimiques récents.

La demande de brevet CN113206 280A divulgue aussi un dispositif de contention pour accumulateur électrique.

Cependant, ces solutions sont couteuses difficiles à mettre en place et requièrent du savoir faire pour leur montage et leur réglage. Ces solutions sont aussi peu flexibles, le démontage de l'accumulateur électrochimique devenant difficile, voire impossible.

### EXPOSÉ DE L'INVENTION

L'invention a pour but d'améliorer les moyens de contention pour accumulateurs électrochimiques prismatiques de l'art antérieur.

À cet effet, l'invention vise un dispositif de contention pour module d'accumulateur électrochimique prismatique, ce dispositif comportant une sangle de cerclage et un mécanisme de serrage, ce mécanisme de serrage comportant :
- un support de coulissement qui comprend un premier terminal de fixation sur lequel une première extrémité de la sangle de cerclage est fixée ;
- un charriot de serrage monté mobile sur le support de coulissement, selon une direction de coulissement, et comportant un deuxième terminal de fixation sur lequel une deuxième extrémité de la sangle de cerclage est fixée ;
- un élément élastique sollicitant le charriot de serrage vers le premier terminal de fixation ;
- un verrou adapté à occuper : une position de rétention dans laquelle le verrou maintient le charriot de serrage à une distance prédéterminée du premier terminal de fixation, à l'encontre de l'élément élastique ; et une position de libération dans laquelle le verrou relâche le charriot de serrage.

Selon un autre objet, l'invention vise un module d'accumulateur électrochimique prismatique comportant au moins une cellule d'accumulateur, une plaque de serrage sur chacune de deux faces opposées du module d'accumulateur, et un dispositif de contention tel que décrit ci-dessus.

Selon un autre objet, l'invention vise un procédé de mise en place d'un dispositif de contention tel que décrit ci-dessus, et qui comporte une étape préliminaire de déplacement du charriot de serrage à l'encontre de l'élément élastique, et de mise en position du verrou en position de rétention.

Le dispositif et le procédé selon l'invention permettent l'utilisation d'une sangle de cerclage même dans le cas des accumulateurs électrochimiques récents qui requièrent l'exercice d'une importante force de serrage sur leurs faces latérales. Le mécanisme de serrage permet la fermeture de la sangle et sa mise en tension contrôlée, même pour une forte tension, avec un encombrement et une masse réduits compte tenu de la force de contention exercée.

La notion de contention s'entend ici comme la mise en compression des faces latérales d'un module d'accumulateur électrochimique.

Un tel dispositif de contention bénéficie d'un encombrement réduit, ce qui lui permet d'être appliqué à des accumulateurs électrochimiques de forte tension même à proximité des bornes de connexion. Les accumulateurs électrochimiques utilisés dans les véhicules électriques, par exemple, présentent à la fois des bornes de connexion délivrant un niveau de tension qui représente un danger, et une configuration confinée avec peu d'espace pour la disposition des moyens de contention.

Des accumulateurs électrochimiques de forte tension et de forte densité d'énergie peuvent ainsi être mis en oeuvre avec une force de contention élevée, et ce de manière flexible et modulaire en permettant de plus un démontage aisé qui augmente la réparabilité de l'ensemble.

La mise en place du mécanisme de serrage ne requiert aucun outil ni aucun réglage particulier, ce qui contraste fortement avec les dispositifs de l'art antérieur qui nécessitent au moins des outils standards voire des outils spécialisés destinés à un personnel formé. Le réglage de la force de serrage appliquée est réalisée automatiquement par la libération d'un élément élastique calibré qui applique seul la force de serrage. La facilité de mise en place des éléments de contention (sans outils) se combine donc avec une sureté de montage élevée, car le calibrage de la force de serrage ne dépend pas de l'opérateur qui met en place le mécanisme de serrage.

Le dispositif de contention selon l'invention procure de plus une fonction supplémentaire dite de « respirabilité ». Dans l'art antérieur cette fonction, lorsqu'elle existe, est réalisée par des éléments proéminents augmentant l'encombrement du module d'accumulateur, et non dans un tel mécanisme de serrage compact. Cette fonction de respirabilité permet au module d'accumulateur, tout en subissant une force de contention permanente, de pouvoir néanmoins se dilater et se contracter lors des cycles de charge et de décharge. En effet, la contention appliquée sur le module d'accumulateur permet, sur un temps long correspondant à la durée de vie de l'accumulateur, d'empêcher un enflement des parois latérales. Cependant, les cycles de charge et de décharge du module d'accumulateur entrainent un échauffement et un refroidissement cyclique qui tendent, de manière indésirable, à augmenter la force de contention durant la dilatation liée à l'échauffement, et à diminuer cette force de contention durant la contraction liée au refroidissement. L'invention permet d'appliquer une force de contention constante, en autorisant la faible variation de dimension liées aux cycles de charge et de décharge.

Le dispositif de contention selon l'invention peut comporter les caractéristiques additionnelles suivantes, seules ou en combinaison :
- le support de coulissement comporte au moins un profilé cylindrique s'étendant selon la direction de coulissement, et le charriot de serrage comporte au moins un coulisseau en liaison glissière avec ce profilé cylindrique ;
- le support de coulissement comporte au moins un barreau qui s'étend transversalement à la direction de coulissement et qui forme le premier terminal de fixation, la sangle de cerclage formant une boucle autour du barreau ;
- le charriot de serrage comporte au moins une barre qui s'étend transversalement à la direction de serrage, et qui forme le deuxième terminal de fixation, la sangle de cerclage formant une boucle autour de la barre ;
- le charriot de serrage comporte au moins une surface d'appui qui est sensiblement perpendiculaire à la direction de serrage, le verrou retenant le charriot de serrage par cette surface d'appui lorsqu'il est dans sa position de rétention ;
- le dispositif comporte une glissière s'étendant dans la direction de serrage, le charriot de serrage étant mobile suivant cette glissière lorsque le verrou est dans sa position de libération ;
- la glissière comporte une extrémité d'appui adaptée à limiter la course du charriot de serrage dans le sens d'un éloignement entre le premier terminal de fixation et le deuxième terminal de fixation, lorsque le verrou est dans sa position de libération ;
- la glissière comporte une extrémité d'appui adaptée à limiter la course du charriot de serrage dans le sens d'un rapprochement entre le premier terminal de fixation et le deuxième terminal de fixation, lorsque le verrou est dans sa position de libération ;
- le charriot de serrage comporte au moins une flasque comportant une rainure définissant la surface d'appui et la glissière ;
- le verrou comporte un taquet qui est appuyé contre la surface d'appui lorsque le verrou est dans sa position de rétention, et qui est positionné dans la glissière lorsque le verrou est dans sa position de libération ;
- le verrou est monté pivotant par rapport au support de coulissement, le passage de la position de rétention à la position de libération du verrou étant réalisée par pivotement ;
- le verrou comporte une patte d'actionnement et la sangle de cerclage est disposée contre cette patte d'actionnement qui est adaptée à entrainer le verrou vers sa position de libération lors du serrage de la sangle de cerclage ;
- l'élément élastique comporte au moins un ressort disposé entre le charriot de serrage et le support de coulissement ;
- la sangle de cerclage comporte une boucle fixe et une boucle ajustable, l'une étant disposée autour du premier terminal de fixation et l'autre étant disposée autour du deuxième terminal de fixation.

Le procédé de mise en place d'un dispositif de contention peut comporter les étapes ou caractéristiques additionnelles suivantes, seules ou en combinaison :
- serrage de la sangle de cerclage par traction sur une extrémité libre d'une boucle ajustable ;
- passage du verrou de sa position de rétention vers sa position de libération par appui de la sangle de cerclage sur le verrou ;
- serrage calibré de la sangle de cerclage par le déplacement du charriot de serrage sous l'effet de l'élément élastique ;
- lors de l'étape de serrage calibré, le charriot de serrage prend une position d'équilibre dans laquelle le serrage de la sangle de cerclage correspond à la force résultant de l'élément élastique ; ou alternativement le charriot de serrage et le verrou viennent en butée l'un contre l'autre sur une extrémité d'appui.

### PRÉSENTATION DES FIGURES

D'autres caractéristiques et avantages de l'invention ressortiront de la description non limitative qui suit, en référence aux dessins annexés dans lesquels :
- la figure 1 est un premier exemple de module d'accumulateur selon l'invention ;
- la figure 2 est un deuxième exemple de module d'accumulateur selon l'invention ;
- la figure 3 est un troisième exemple de module d'accumulateur selon l'invention ;
- la figure 4 est une vue en perspective d'un dispositif de contention selon l'invention ;
- la figure 5 est une vue éclatée du dispositif de contention ;
- la figure 6 est une vue en coupe du dispositif de contention ;
- la figure 7 est une autre vue en coupe du dispositif de contention ;
- la figure 8 est une vue en coupe du dispositif de contention, le verrou étant dans sa position de rétention ;
- la figure 9 est un schéma cinématique correspondant à la figure 8 ;
- la figure 10 est une vue en coupe du dispositif de contention, le verrou étant en cours de passage à sa position de libération ;
- la figure 11 est un schéma cinématique correspondant à la figure 10 ;
- la figure 12 est une vue en coupe du dispositif de contention, le verrou étant dans sa position de libération ;
- la figure 13 est un schéma cinématique correspondant à la figure 12 ;
- la figure 14 est une vue en coupe du dispositif de contention illustrant une fonction de respirabilité ;
- la figure 15 est une vue en coupe du dispositif de contention d'un accumulateur électrochimique en fin de vie.

### DESCRIPTION DÉTAILLÉE

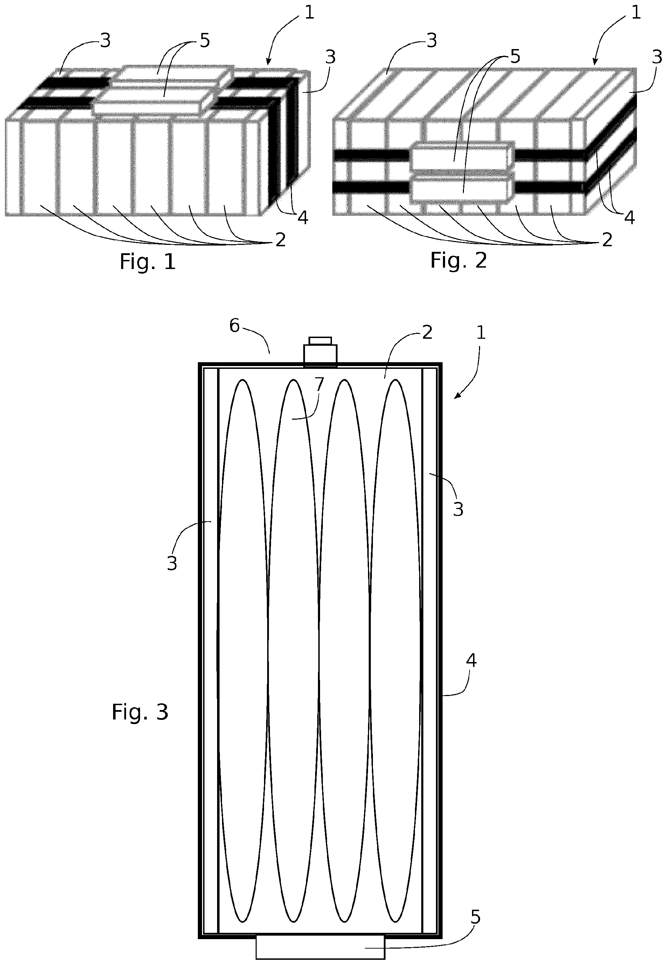

Les figures 1 à 3 sont des figures schématiques illustrant trois exemples de module d'accumulateur électrochimique 1.

Dans l'exemple des figures 1 et 2, chaque module 1 est constitué de six cellules d'accumulateur 2. Le module 1 comporte un dispositif de contention comprenant deux plaques de serrage 3 disposées sur les parois latérales du module 1. Le dispositif de contention comprend ici deux sangles 4 munies chacune d'un mécanisme de serrage 5. Sur la figure 1, les sangles 4 encerclent le module 1 selon des plans verticaux, et sur la figure 2, les sangles 4 encerclent le module 1 selon des plans horizontaux. Alternativement, les mécanismes de serrage 5 peuvent être doublés de part et d'autre des modules pour faciliter l'égalisation du serrage. Ils peuvent être aussi positionnés sur les plaques de serrage 3. Les mécanismes de serrage 5 peuvent aussi être intégrés aux plaques de serrage 3.

Sur l'exemple de la figure 3, le module 1 n'est constitué que d'une seule cellule d'accumulateur 2. Le dispositif de contention peut en effet être appliqué à tout module 1 comportant une ou plusieurs cellules d'accumulateur 2. La figure 3 est une vue en coupe du module 1 montrant une borne de connexion 6 de la cellule d'accumulateur 2.

Les cellules d'accumulateur 2 des figures 1 à 3 sont des cellules d'accumulateur prismatiques, c'est-à-dire que les bobineaux 7 (voir figure 3) sont aplatis et sont disposés dans un boitier prismatique. Cette disposition permet la mise en oeuvre de cellules d'accumulateur 2 de grande dimension et de forte puissance, qui comportent des bornes de connexion 6 également de grande dimension, et qui présentent une forte densité d'énergie. Cet agencement est incontournable dans de nombreuses applications exigeantes, notamment dans les véhicules électriques. Cependant, cet agencement nécessite une force de contention importante sur les parois latérales des modules 1, force de contention qui augmente durant le cycle de vie du module 1. À titre d'exemple, un module d'accumulateur de véhicule électrique actuel nécessite une force de contention de l'ordre de 2 kN par cellule d'accumulateur et qui peut aller jusqu'à 15 kN en fin de vie de l'accumulateur. Cette force de contention correspond à la force de serrage de la sangle de cerclage 4.

Dans l'exemple de la figure 3, le module 1 est constitué d'une seule cellule d'accumulateur 2, entourée par une seule sangle 4 et son mécanisme de serrage 5. Le mécanisme de serrage 5 est dans cet exemple disposé à l'opposé de la borne de connexion 6, en libérant les faces latérales du module 1, par exemple pour accoler plusieurs modules côte à côte, et en libérant l'espace supérieur du module 1 pour éviter tout risque électrique.

Ces exemples de disposition du mécanisme de serrage 5 sont données à titre illustratif, étant entendu que ce mécanisme de serrage 5 peut être installé à tout endroit sur le trajet de la sangle 4.

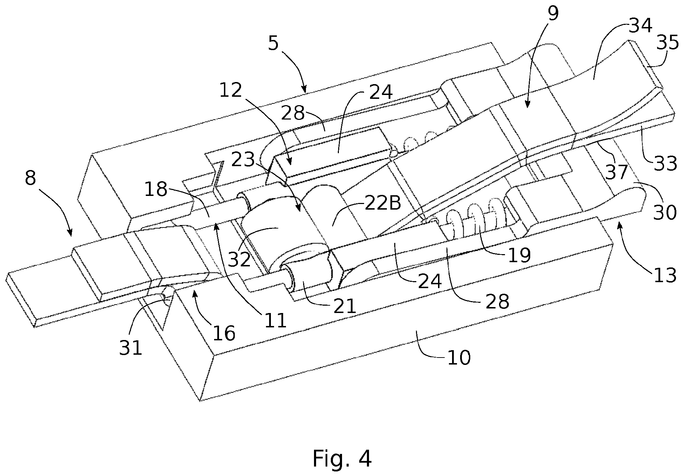

Les figures 4 à 15 illustrent plus en détail la constitution du mécanisme de serrage 5.

La figure 4 illustre le mécanisme de serrage 5 en perspective, ainsi qu'une première extrémité 8 et une deuxième extrémité 9 de la sangle 4, reliées au mécanisme de serrage 5. Le mécanisme de serrage 5 maintient une tension entre la première extrémité 8 et la deuxième extrémité 9 selon une force calibrée. Le mécanisme de serrage 5 sollicite ainsi la première extrémité, en appliquant une force calibrée qui correspond à la force de serrage souhaitée, que l'on souhaite appliquer sur le module d'accumulateur par la sangle 4.

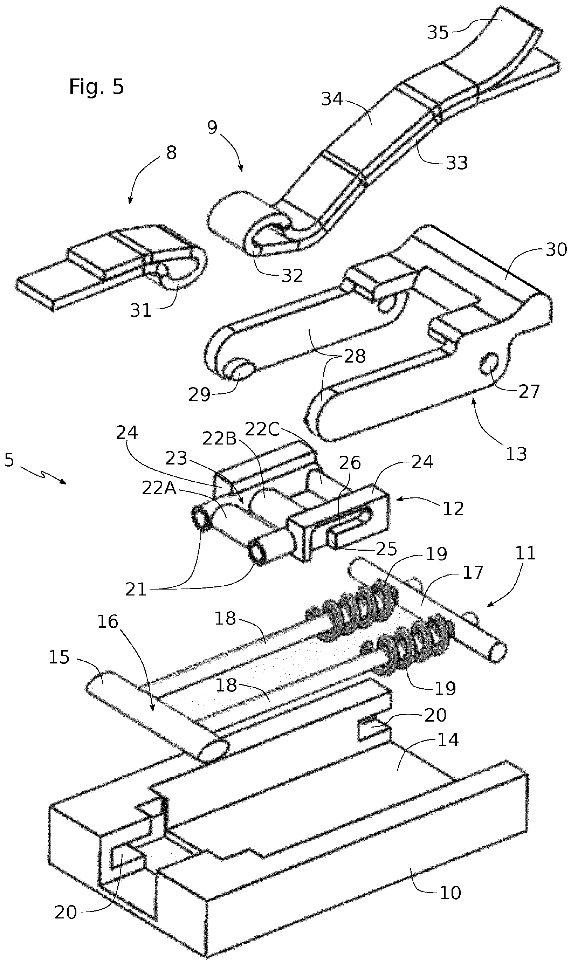

La figure 5 est une vue éclatée des éléments de la figure 4.

Le mécanisme de serrage 5 comporte un socle 10, un support de coulissement 11, un charriot de serrage 12, et un verrou 13. De préférence, tous ces éléments sont non conducteurs électriquement, pour éviter tout risque électrique. La sangle 4 est par exemple une tresse de textile technique tel que de l'aramide, qui présente un très faible allongement propice à cette application de serrage. Le socle 10, le support de coulissement 11, le charriot de serrage 12, et le verrou 13 peuvent être réalisés dans un polymère ou un matériau composite diélectriques d'une rigidité suffisante pour leurs fonctions respectives.

Le socle 10 définit un logement central 14 dans lequel est disposé le support de coulissement 11.

Le support de coulissement 11 comporte, dans cet exemple, deux profilés cylindriques 18 parallèles, formant une structure de coulissement qui est fermée à l'une de ses extrémités par un barreau 15 qui constitue ici un premier terminal de fixation 16. À son autre extrémité, le support de coulissement est fermé par une butée 17. La direction longitudinale dans laquelle s'étendent les profilés cylindriques 18 définit une direction de serrage. Le barreau 15 et la butée 17 s'étendent transversalement à cette direction de serrage, c'est-à-dire que le barreau 15 et la butée 17 sont sensiblement perpendiculaires à cette direction de serrage.

Dans le présent exemple, tous les éléments du support de coulissement 11 sont constitués de manière simple par des barres à section circulaire.

Le mécanisme de serrage 5 comporte de plus un élément élastique qui est ici constitué de deux ressorts de compression 19. Chaque ressort 19 est monté sur l'un des profilés cylindriques 18 et s'appuie sur la butée 17.

Alternativement, les profilés cylindriques 18 peuvent présenter tout autre section permettant une liaison glissière.

Dans le présent exemple, les deux profilés cylindriques 18 et le barreau 15 sont fixés ou moulés ensemble tandis que la butée 17 est mise en place et fixée sur les profilés cylindriques 18 après l'engagement des ressorts 19 sur les profilés cylindriques 18.

Le socle 10 comporte des rainures 20 comme moyen de maintien pour le support de coulissement 11. Le barreau 15 et la butée 17 sont glissés et maintenus dans les rainures 20.

Le charriot de serrage 12 comporte deux coulisseaux 21 permettant une liaison glissière entre le charriot de serrage 12 et le support de coulissement 11. Dans cet exemple, les coulisseaux 21 sont des tubes creux adaptés à coulisser sur les profilés cylindriques 18 par un ajustement approprié. Le charriot de serrage 12 est relié au support de coulissement 11 selon une liaison glissière dont l'axe est la direction de serrage.

Le charriot de serrage 12 présente ici une structure comportant des barres transversales 22A, 22B, 22C s'étendant entre les deux coulisseaux 21. Une première barre transversale 22A et une deuxième barre transversale 22B forment un deuxième terminal de fixation 23 destiné à fixer la deuxième extrémité 9 de la sangle 4. Le charriot de serrage 12 est ainsi structuré par ses éléments fonctionnels.

Le charriot de serrage 12 comporte de plus deux flasques 24 disposées latéralement et comportant chacune une rainure en forme de L qui définit d'une part une surface d'appui 25 qui est perpendiculaire à la direction de coulissements, et d'autre part une glissière 26.

Le verrou 13 est constitué ici d'un levier basculant qui comporte ici deux trous d'axe 27 permettant son montage pivotant par rapport au support de coulissement 11. Dans cet exemple, le verrou 13 est directement monté sur le support de coulissement 11 et la barre constituant la butée 17 passe directement dans les trous d'axe 27 pour assurer une liaison pivot entre le verrou 13 et le support de coulissement 11.

Le verrou 13 comporte deux bras 28 comportant chacun à leur extrémité un taquet 29 qui est ici constitué d'un simple bossage cylindrique en saillie du bras 28. Le verrou 13 comporte de plus une patte d'actionnement 30 permettant le pivotement du verrou 13 par appui sur cette patte d'actionnement 30.

La première extrémité 8 de la sangle 4 est fixée par une boucle fixe 31 (ou toute autre boucle appropriée) sur le premier terminal de fixation 16, constitué ici du barreau 15. La deuxième extrémité 9 de la sangle 4 est fixée par une boucle ajustable 32 sur le deuxième terminal de fixation 23 situé sur le charriot de serrage 12.

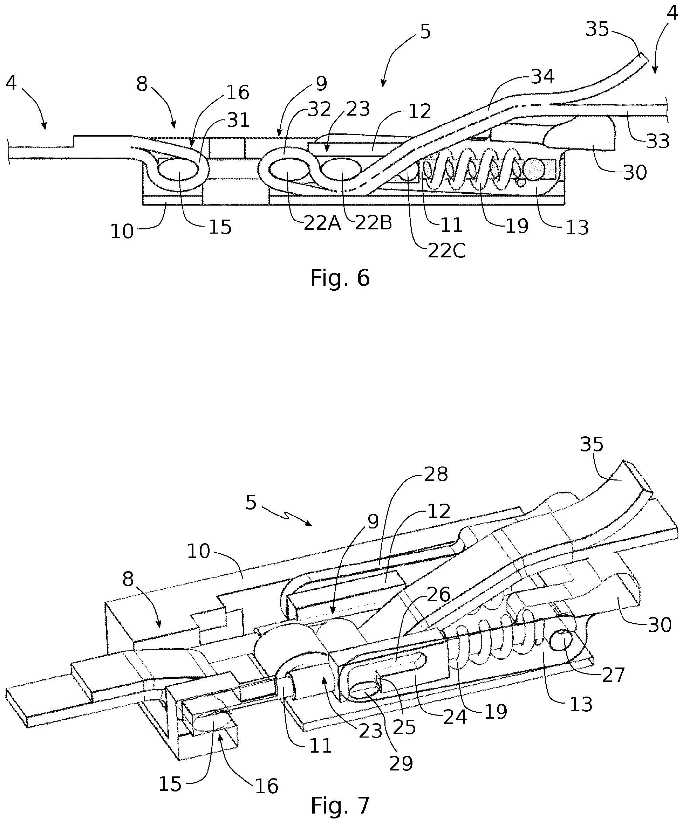

La figure 6 est une vue en coupe longitudinale, montrant notamment le positionnement des boucles 31, 32 de la sangle 4.

La boucle fixe 31 est constituée simplement d'une portion de sangle qui est rebouclée sur elle-même (cousue ou soudée, par exemple) autour du barreau 15.

La boucle ajustable 32 est réalisée par le cheminement d'un premier brin 33 de la sangle 4 (issu du cerclage autour du module d'accumulateur 1) qui est passé en dessous de la deuxième barre transversale 22B, puis boucle sur la première barre transversale 22A. La sangle 4 revient ensuite par un deuxième brin 34, sortant de la boucle autour de la première barre transversale 22A, ce deuxième brin 34 passant sous la deuxième barre transversale 22B (le deuxième brin 34 passe entre la deuxième barre transversale 22B et le premier brin 33). Le deuxième brin 34 est saillant du charriot de serrage 12 jusqu'à l'extrémité libre 35 de la sangle 4.

La figure 7 est une vue en perspective avec une coupe verticale passant par l'un des bras 28 du verrou 13.

Sur cette figure, le mécanisme de serrage 5 est dans une configuration initiale, permettant sa mise en place, le verrou 13 étant dans une position de rétention dans laquelle il maintient le charriot de serrage 12 à une distance prédéterminée du premier terminal de fixation 16, en comprimant les ressorts 19. La surface d'appui 25 du charriot de serrage 12 est alors pressée par les ressorts 19 contre le taquet 29 du verrou 13.

Le verrou 13 est monté pivotant sur le support de coulissement 11 par ses trous d'axe 27, et sa position de rétention (illustrée à la figure 7) correspond à une position angulaire du verrou 13 qui positionne les taquets 29 face aux surfaces d'appui 25.

Grâce à cette rétention des ressorts 19, la force des ressorts 19 ne s'applique pas à la tension de la sangle 4.

Cette position de rétention du verrou 13 permet, lors de la mise en place du mécanisme de serrage 5, de serrer au plus juste la sangle 4, manuellement, par une traction sur son extrémité libre 35, avant que les ressorts 19 n'entrent en jeu pour fournir un serrage calibré.

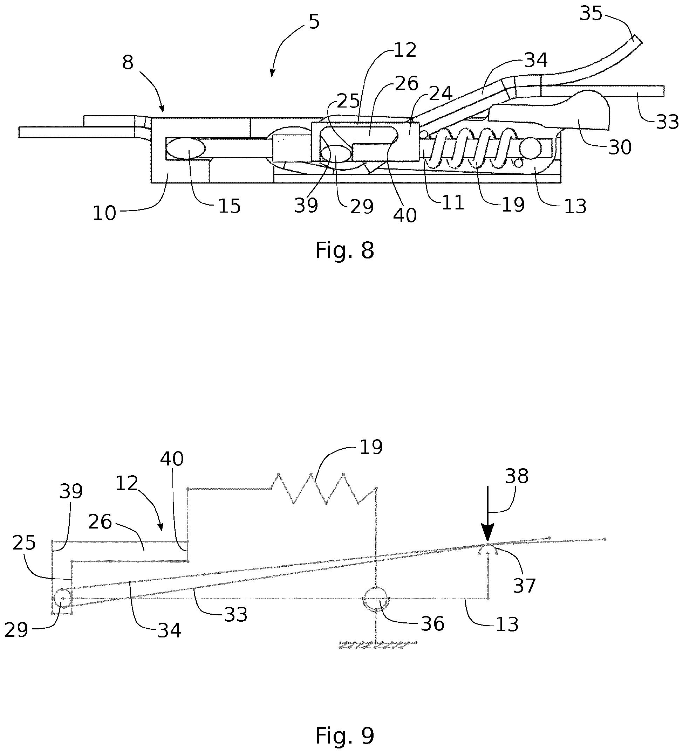

Le procédé de mise en place du dispositif de contention va maintenant être décrit en référence aux figures 8 à 14.

La figure 8 est une vue de profil en coupe, similaire à la vue de la figure 7, illustrant la coopération du verrou 13 et du charriot de serrage 12. Sur cette figure 8, le mécanisme de serrage 5 est dans sa configuration initiale, le verrou 13 étant dans sa position de rétention, comme sur la figure 7.

La figure 9 est un schéma cinématique rendant compte des forces en jeu et des déplacements permis. Sur cette figure, une forme en L schématise la rainure du charriot de serrage 12 qui forme la surface d'appui 25 et la glissière 26. Les pièces en interaction avec cette rainure sont également représentées :
- les ressorts 19 ;
- les taquets 29 ;
- l'axe de pivotement 36 du verrou 13 sur le support de coulissement 11 ;
- les deux brins 33, 34 de la boucle ajustable 32 ;
- le point d'appui 37 de la sangle 4 sur la patte d'actionnement 30 du verrou 13.

Cette configuration initiale est obtenue lors d'une étape préliminaire en usine, lors de la production du mécanisme de serrage 5. Le charriot de serrage 12 est saisi et reculé (par un montage de prise de pièce adapté), en comprimant les ressorts 19 jusqu'à une position reculée où le verrou 13 peut être basculé pour amener les taquets 29 en vis-à-vis des surfaces d'appui 25, puis en relâchant le charriot de serrage 12 pour maintenir ainsi le charriot de serrage 12 dans cette position rétractée. Le verrou 13 est de préférence bloqué dans cette position, par exemple grâce à une goupille ou tout autre moyen analogue, permettant la manipulation et la livraison du mécanisme de serrage 5 sans risque de déclenchement par rotation du verrou 13.

Lorsque le dispositif de contention est prêt à être monté sur le module d'accumulateur 1 pour lequel il est prévu, la sangle 4 est tout d'abord mise en place autour de ce module d'accumulateur 1. La sangle 4 encercle le module d'accumulateur 1, entre sa boucle fixe 31 et sa boucle ajustable 32. Le mécanisme de serrage 5 est également mis en place dans la zone souhaitée sur le module d'accumulateur 1.

La boucle ajustable 32 est ensuite serrée manuellement. Un opérateur exerce alors une traction sur l'extrémité libre 35 de la boucle ajustable 32 pour reprendre le mou de la sangle 4 jusqu'à procéder à un serrage manuel.

La figure 9 montre que ce serrage manuel entraine une pression du premier brin 33 sur la patte d'actionnement 30 (schématisée par la flèche 38 sur la figure 9). La patte d'actionnement 30 passe en effet sous le premier brin 33 de la sangle 4, et la forme de la patte d'actionnement 30 est prévue pour former un levier sur lequel ce brin 33 peut appuyer.

Au fur et à mesure du serrage de la sangle 4, par traction sur le deuxième brin 34, par son extrémité libre 35, la force 38 augmente jusqu'à provoquer un basculement du verrou 13 autour de l'axe 36.

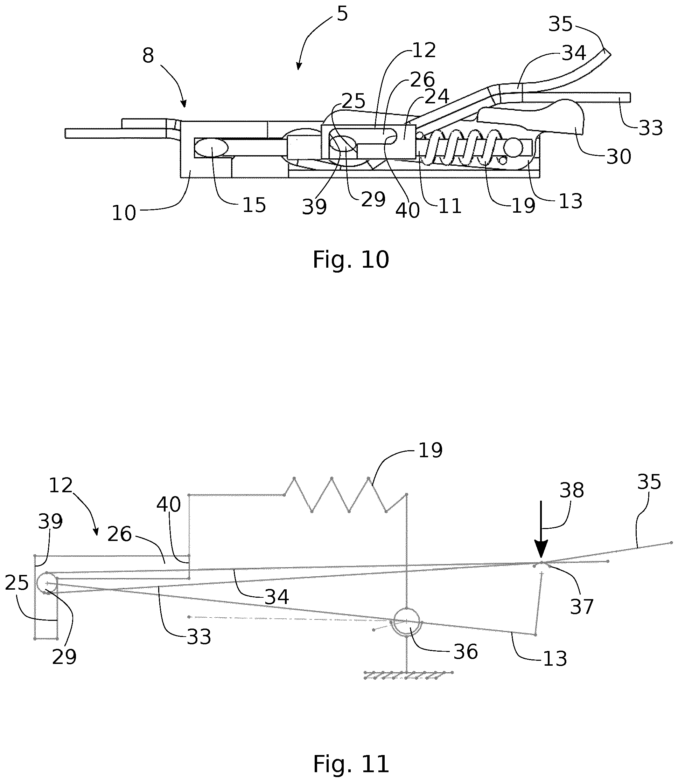

La figure 10 correspond à une position intermédiaire de ce basculement, dans laquelle le verrou 13 a commencé à basculer et les taquets 29 ont glissé sur les surfaces d'appui 25 jusqu'à venir sur le rebord de ces surfaces d'appui 25. La figure 11 est une vue cinématique, similaire à la figure 9, pour cette position de la figure 10.

Le verrou 13 est donc toujours dans sa position de rétention, mais les surfaces d'appui 25 sont sur le point d'échapper à la rétention des taquets 29. La poursuite du serrage entraine la poursuite du basculement du verrou 13 au-delà de cette position des figures 10 et 11, ce qui entraine un passage des taquets 29 dans les glissières 26 de sorte que les taquets 29 ne retiennent plus le charriot de serrage 12 par ses surfaces d'appui 25.

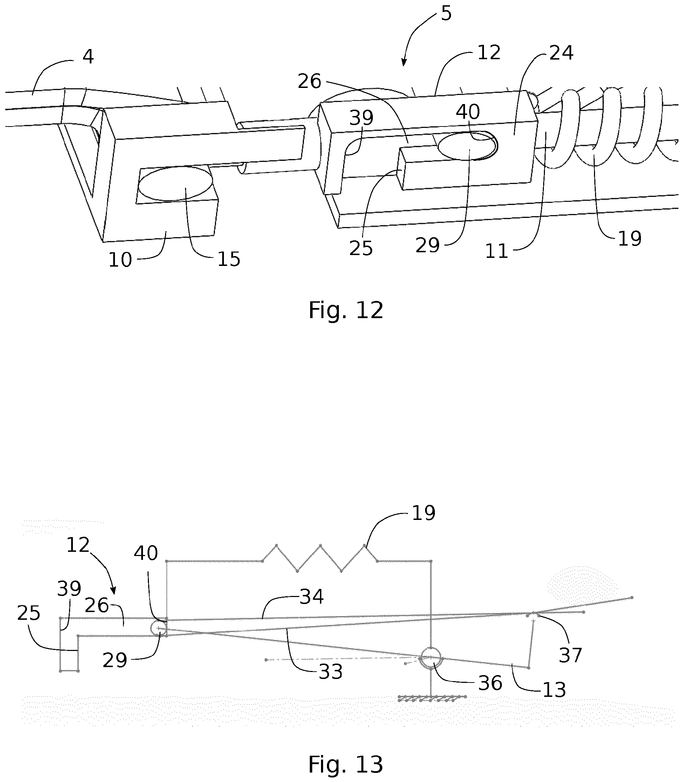

La figure 13 illustre la configuration du mécanisme de serrage 5 après le pivotement du verrou 13 et son passage en position de libération. Le verrou 13 a relâché le charriot de serrage 12, ce qui permet à ce dernier de se translater sur le support de coulissement 11, sous l'effet des ressorts 19, tandis que les taquets 29 coulissent librement dans les glissières 26.

Le charriot de serrage 12 va ensuite se placer dans une position d'équilibre dans laquelle la sangle 4 est tendue par application d'une force qui est uniquement déterminée par le tarage des ressorts 19.

Les ressorts 19 sont à ce titre calibrés pour appliquer la force de serrage souhaitée pour l'application. Dans le présent exemple, une force de 100 daN est appliquée sur la sangle 4. Cette force de serrage de la sangle 4 est déterminée précisément par des ressorts 19 dont le tarage correspond à cette force.

La figure 12 illustre cette position d'équilibre du charriot de serrage 12, le verrou 13 étant dans sa position de libération. Le mécanisme est dimensionné pour que, dans cette position d'équilibre, les taquets 29 viennent à proximité de l'extrémité des glissières 26 sans toutefois venir buter contre le fond de cette glissière 26, de sorte que seuls les ressorts 19 appliquent la force de serrage. La position des taquets 29 résulte ainsi d'un équilibre entre la tension de la sangle 4 et la pression des ressorts 19. Les ressorts 19 et la plage de déplacement sont calibrés pour gérer la force appliquée, y compris si la sangle se détend un peu. Ainsi, lors du serrage calibré du dispositif, le charriot de serrage 12 prend une position d'équilibre dans laquelle le serrage de la sangle de cerclage 4 correspond à la force résultant des ressorts 19.

En variante, le mécanisme peut être dimensionné pour que, dans cette position d'équilibre, les taquets 29 viennent en fond de glissière sur les glissières 26, de sorte que les ressorts 19 appliquent la force de serrage en venant en butée. Les glissières 26 comportent alors à cet effet une extrémité d'appui 40 adaptée à limiter la course du charriot de serrage 12 dans le sens d'un rapprochement entre le premier terminal de fixation 16 et le deuxième terminal de fixation 23, lorsque le verrou 13 est dans sa position de libération. Le charriot de serrage 12 et le verrou 13 viennent ainsi en butée l'un contre l'autre sur l'extrémité d'appui 40.

La mise en place du dispositif de contention et son serrage initial a été ainsi réalisée de manière extrêmement simple et rapide, en tirant sur l'extrémité libre 35 du deuxième brin 34. Le passage du verrou 13 de sa position de rétention à sa position de libération s'est alors fait de manière automatique par la pression du deuxième brin 34 sur la patte d'actionnement 30. Suite à ce basculement en position de libération du verrou 13, la force de serrage appliquée sur la sangle a ensuite été automatiquement calibrée par les ressorts 19. La mise en place du dispositif de contention n'a ainsi nécessité aucun outil, ni savoir-faire particulier, ni aucun réglage.

Suite à la mise en place du dispositif de contention, le mécanisme de serrage 5 assure le serrage de la sangle 4. Le module d'accumulateur 1 va ensuite être mis en production et subir ses cycles de charge et de décharge.

Durant les cycles de charge, le module d'accumulateur 1 s'échauffe et se dilate, ce qui provoque une traction sur la sangle 4. Le charriot de serrage 12 bénéficie alors de la liberté de coulisser sur le support de coulissement 11, selon une faible plage correspondant à cette dilatation. Cette fonction de respirabilité permet aux taquets 29 de se déplacer dans la glissière 26.

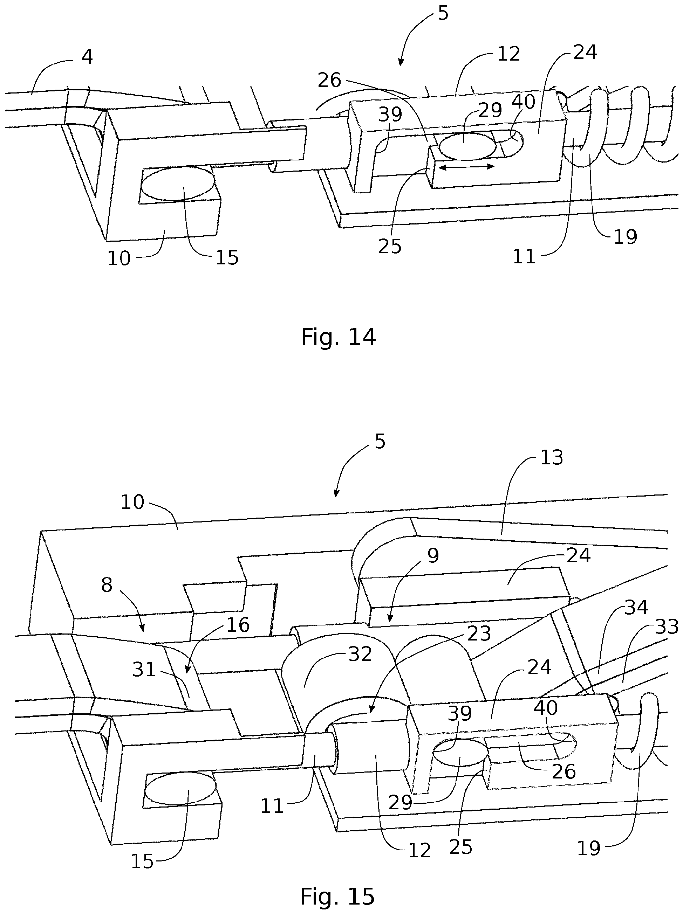

La figure 14 illustre cette fonction de respirabilité, les taquets 29 étant mobiles dans la plage indiquée par la double flèche, au gré des dilatations et rétractations successives du module d'accumulateur 1 soumis à des cycles de charge et de décharge.

Durant ce mouvement du charriot de serrage 12, la force de serrage que la sangle 4 applique sur le module est toujours la même, puisque calibrée par les ressorts 19. La fonction de respirabilité permet ainsi de maintenir constante la force de serrage calibrée sur la sangle 4, tout en permettant la légère dilatation et rétractation normale du module d'accumulateur 1 au cours de sa vie.

La position d'équilibre du charriot de serrage 12 se déplace au fur et à mesure du vieillissement du module d'accumulateur 1, au cours de son cycle de vie, et de sa déformation par gonflement (le charriot de serrage 12 se déplace vers la droite, en référence à sa position sur les figures), car le gonflement entraine une traction sur la sangle 4.

La figure 15 illustre une phase finale de ce trajet du charriot de serrage 12 au cours du vieillissement du module. En effet, lors d'une phase avancée du vieillissement du module d'accumulateur 1, le charriot de serrage 12 parvient jusqu'au point où les taquets 29 viennent buter sur une extrémité d'appui 39 des glissières 26, comme illustré à cette figure 15.

À partir de cette position, les ressorts 19 cessent de calibrer la force de serrage de la sangle 4, qui va alors augmenter au fur et à mesure du gonflement de la cellule. Dans cette phase avancée du cycle de vie du module d'accumulateur 1, la fonction de respirabilité n'est plus permise et le mécanisme de serrage 5 se dédie à une contention maximale du module d'accumulateur 1. Le charriot de serrage 12 maintien alors un écartement maximal prédéterminé entre la première extrémité 8 et la deuxième extrémité 9 de la sangle 4, correspondant à la mise en butée de l'extrémité d'appui 39 des glissières 26 contre les taquets 29. L'extrémité d'appui 39 est ainsi adaptée à limiter la course du charriot de serrage 12 dans le sens d'un éloignement entre le premier terminal de fixation 16 et le deuxième terminal de fixation 23.

Le verrou 13 et ses taquets 29 remplissent donc ici, durant cette phase avancée du cycle de vie du module d'accumulateur 1, une deuxième fonction de blocage du charriot de serrage 12, cette fois pour privilégier un serrage maximal de la sangle 4 sur le module d'accumulateur 1.

Des variantes de réalisation du dispositif de contention et de son procédé de mise en place peuvent être envisagées. Par exemple, la boucle ajustable 32 peut être mise en place préalablement à la mise en place du dispositif de contention sur le module d'accumulateur 1, ou a postériori par l'opérateur avant le serrage.

Les liaisons mécaniques relatives entre le support de coulissement 11, le charriot de serrage 12, et le verrou 13 peuvent de plus être réalisées par d'autres moyens que ceux illustrés ici en exemple, grâce à des glissières, des coulisseaux, etc. Le verrou 13 peut être monté sur d'autres pièces, telles que le socle 10, pour être mobile par rapport au support de coulissement 11. Cette mobilité peut être obtenue par d'autres moyens que par pivotement, par exemple par une glissière.

Une boucle ajustable de la sangle peut être disposée, en alternative ou en complément, sur le premier terminal de fixation.

## Revendications

1. Dispositif de contention pour module d'accumulateur électrochimique prismatique, ce dispositif comportant une sangle de cerclage (4) et un mécanisme de serrage (5), **caractérisé en ce que** le mécanisme de serrage (5) comporte :
- un support de coulissement (11) qui comprend un premier terminal de fixation (16) sur lequel une première extrémité (8) de la sangle de cerclage (4) est fixée ;
- un charriot de serrage (12) monté mobile sur le support de coulissement (11), selon une direction de coulissement, et comportant un deuxième terminal de fixation (23) sur lequel une deuxième extrémité (9) de la sangle de cerclage (4) est fixée ;
- un élément élastique (19) sollicitant le charriot de serrage (12) vers le premier terminal de fixation (16) ;
- un verrou (13) adapté à occuper: une position de rétention dans laquelle le verrou (13) maintient le charriot de serrage (12) à une distance prédéterminée du premier terminal de fixation (16), à l'encontre de l'élément élastique (19) ; et une position de libération dans laquelle le verrou (13) relâche le charriot de serrage (12).

2. Dispositif de contention selon la revendication 1, **caractérisé en ce que** le support de coulissement (11) comporte au moins un profilé cylindrique (18) s'étendant selon la direction de coulissement, et **en ce que** le charriot de serrage (12) comporte au moins un coulisseau (21) en liaison glissière avec ce profilé cylindrique (18).

3. Dispositif de contention selon l'une des revendications précédentes, **caractérisé en ce que** le support de coulissement (11) comporte au moins un barreau (15) qui s'étend transversalement à la direction de coulissement et qui forme le premier terminal de fixation (16), la sangle de cerclage (4) formant une boucle autour du barreau (15).

4. Dispositif de contention selon l'une des revendications précédentes, **caractérisé en ce que** le charriot de serrage (12) comporte au moins une barre (22A,22B) qui s'étend transversalement à la direction de serrage, et qui forme le deuxième terminal de fixation (23), la sangle de cerclage (4) formant une boucle autour de la barre (22A,22B).

5. Dispositif de contention selon l'une des revendications précédentes, **caractérisé en ce que** le charriot de serrage (12) comporte au moins une surface d'appui (25) qui est sensiblement perpendiculaire à la direction de serrage, le verrou (13) retenant le charriot de serrage (12) par cette surface d'appui (25) lorsqu'il est dans sa position de rétention.

6. Dispositif de contention selon l'une des revendications précédentes, **caractérisé en ce qu'**il comporte une glissière (26) s'étendant dans la direction de serrage, le charriot de serrage (12) étant mobile suivant cette glissière (26) lorsque le verrou (13) est dans sa position de libération.

7. Dispositif de contention selon la revendication 6, **caractérisé en ce que** la glissière (26) comporte une extrémité d'appui (39) adaptée à limiter la course du charriot de serrage (12) dans le sens d'un éloignement entre le premier terminal de fixation (16) et le deuxième terminal de fixation (23), lorsque le verrou (13) est dans sa position de libération.

8. Dispositif de contention selon l'une des revendications 6 ou 7, **caractérisé en ce que** la glissière (26) comporte une extrémité d'appui (40) adaptée à limiter la course du charriot de serrage (12) dans le sens d'un rapprochement entre le premier terminal de fixation (16) et le deuxième terminal de fixation (23), lorsque le verrou (13) est dans sa position de libération.

9. Dispositif de contention selon l'une des revendications 6 à 8 lorsqu'elles dépendent de la revendication 5, **caractérisé en ce que** le charriot de serrage (12) comporte au moins une flasque (24) comportant une rainure définissant la surface d'appui (25) et la glissière (26).

10. Dispositif de contention selon l'une des revendications 6 à 9 lorsqu'elles dépendent de la revendication 5, **caractérisé en ce que** le verrou (13) comporte un taquet (29) qui est appuyé contre la surface d'appui (25) lorsque le verrou (13) est dans sa position de rétention, et qui est positionné dans la glissière (26) lorsque le verrou (13) est dans sa position de libération.

11. Dispositif de contention selon l'une des revendications précédentes, **caractérisé en ce que** le verrou (13) est monté pivotant par rapport au support de coulissement (11), le passage de la position de rétention à la position de libération du verrou (13) étant réalisée par pivotement.

12. Dispositif de contention selon l'une des revendications précédentes, **caractérisé en ce que** le verrou (13) comporte une patte d'actionnement (30) et **en ce que** la sangle de cerclage (4) est disposée contre cette patte d'actionnement (30) qui est adaptée à entrainer le verrou (13) vers sa position de libération lors du serrage de la sangle de cerclage (4).

13. Dispositif de contention selon l'une des revendications précédentes, **caractérisé en ce que** l'élément élastique (19) comporte au moins un ressort disposé entre le charriot de serrage (13) et le support de coulissement (11).

14. Dispositif de contention selon l'une des revendications précédentes, **caractérisé en ce que** la sangle de cerclage (4) comporte une boucle fixe (31) et une boucle ajustable (32), l'une étant disposée autour du premier terminal de fixation (16) et l'autre étant disposée autour du deuxième terminal de fixation (23).

15. Module d'accumulateur électrochimique prismatique, comportant au moins une cellule d'accumulateur (7), une plaque de serrage (3) sur chacune de deux faces opposées du module d'accumulateur, et un dispositif de contention selon l'une des revendications 1 à 14.

16. Procédé de mise en place d'un dispositif de contention selon l'une des revendications 1 à 14, **caractérisé en ce qu'**il comporte une étape préliminaire de déplacement du charriot de serrage (12) à l'encontre de l'élément élastique (19), et de mise en position du verrou (13) en position de rétention.

17. Procédé selon la revendication 16, **caractérisé en ce qu'**il comporte en outre les étapes suivantes :
- serrage de la sangle de cerclage (4) par traction sur une extrémité libre (35) d'une boucle ajustable (32) ;
- passage du verrou (13) de sa position de rétention vers sa position de libération par appui de la sangle de cerclage (4) sur le verrou (13) ;
- serrage calibré de la sangle de cerclage (4) par le déplacement du charriot de serrage (12) sous l'effet de l'élément élastique (19).

18. Procédé selon la revendication 17, **caractérisé en ce que**, lors de l'étape de serrage calibré, le charriot de serrage (12) prend une position d'équilibre dans laquelle le serrage de la sangle de cerclage (4) correspond à la force résultant de l'élément élastique (19).

19. Procédé selon la revendication 17, **caractérisé en ce que**, lors de l'étape de serrage calibré, le charriot de serrage (12) et le verrou (13) viennent en butée l'un contre l'autre sur une extrémité d'appui (40).

## Patentansprüche

1. Kompressionsvorrichtung für ein prismatisches elektrochemisches Speichermodul, wobei diese Vorrichtung einen Umreifungsgurt (4) und einen Spannmechanismus (5) aufweist, **dadurch gekennzeichnet, dass** der Spannmechanismus (5) aufweist:
- einen Gleithalter (11), der ein erstes Befestigungsendstück (16) umfasst, an dem ein erstes Ende (8) des Umreifungsgurtes (4) befestigt ist;
- einen Spannwagen (12), der auf dem Gleithalter (11) in einer Gleitrichtung beweglich gelagert ist und ein zweites Befestigungsendstück (23) aufweist, an dem ein zweites Ende (9) des Umreifungsgurtes (4) befestigt ist;
- ein elastisches Element (19), das den Spannwagen (12) in Richtung des ersten Befestigungsendstücks (16) beaufschlagt;
- einen Riegel (13), der dazu eingerichtet ist einzunehmen: eine Rückhalteposition, in welcher der Riegel (13) den Spannwagen (12) in einem vorbestimmten Abstand vom ersten Befestigungsendstück (16) hält, entgegen der Wirkung des elastischen Elements (19); und eine Freigabeposition, in welcher der Riegel (13) den Spannwagen (12) loslässt.

2. Kompressionsvorrichtung nach Anspruch 1, **dadurch gekennzeichnet, dass** der Gleithalter (11) mindestens ein zylindrisches Profilelement (18) aufweist, das sich in der Gleitrichtung erstreckt, und dadurch, dass der Spannwagen (12) mindestens ein Gleitstück (21) aufweist, das mit diesem zylindrischen Profilelement (18) in Gleitverbindung steht.

3. Kompressionsvorrichtung nach einem der vorhergehenden Ansprüche, **dadurch gekennzeichnet, dass** der Gleithalter (11) mindestens einen Stab (15) aufweist, der sich quer zur Gleitrichtung erstreckt und der das erste Befestigungsendstück (16) bildet, wobei der Umreifungsgurt (4) eine Schleife um den Stab (15) herum bildet.

4. Kompressionsvorrichtung nach einem der vorhergehenden Ansprüche, **dadurch gekennzeichnet, dass** der Spannwagen (12) mindestens eine Stange (22A, 22B) aufweist, die sich quer zur Spannrichtung erstreckt und die das zweite Befestigungsendstück (23) bildet, wobei der Umreifungsgurt (4) eine Schleife um die Stange (22A, 22B) herum bildet.

5. Kompressionsvorrichtung nach einem der vorhergehenden Ansprüche, **dadurch gekennzeichnet, dass** der Spannwagen (12) mindestens eine Anlagefläche (25) aufweist, die im Wesentlichen senkrecht zur Spannrichtung ist, wobei der Riegel (13) den Spannwagen (12) über diese Anlagefläche (25) zurückhält, wenn er sich in seiner Rückhalteposition befindet.

6. Kompressionsvorrichtung nach einem der vorhergehenden Ansprüche, **dadurch gekennzeichnet, dass** sie eine Gleitführung (26) aufweist, die sich in der Spannrichtung erstreckt, wobei der Spannwagen (12) entlang dieser Gleitführung (26) beweglich ist, wenn sich der Riegel (13) in seiner Freigabeposition befindet.

7. Kompressionsvorrichtung nach Anspruch 6, **dadurch gekennzeichnet, dass** die Gleitführung (26) ein Anlageende (39) aufweist, das dazu eingerichtet ist, den Weg des Spannwagens (12) in der Richtung eines Entfernens des ersten Befestigungsendstücks (16) und des zweiten Befestigungsendstücks (23) voneinander zu begrenzen, wenn sich der Riegel (13) in seiner Freigabeposition befindet.

8. Kompressionsvorrichtung nach einem der Ansprüche 6 oder 7, **dadurch gekennzeichnet, dass** die Gleitführung (26) ein Anlageende (40) aufweist, das dazu eingerichtet ist, den Weg des Spannwagens (12) in der Richtung einer Annäherung des ersten Befestigungsendstücks (16) und des zweiten Befestigungsendstücks (23) aneinander zu begrenzen, wenn sich der Riegel (13) in seiner Freigabeposition befindet.

9. Kompressionsvorrichtung nach einem der Ansprüche 6 bis 8, wenn sie von Anspruch 5 abhängen, **dadurch gekennzeichnet, dass** der Spannwagen (12) mindestens ein Seitenteil (24) aufweist, das eine Nut aufweist, welche die Anlagefläche (25) und die Gleitführung (26) definiert.

10. Kompressionsvorrichtung nach einem der Ansprüche 6 bis 9, wenn sie von Anspruch 5 abhängen, **dadurch gekennzeichnet, dass** der Riegel (13) einen Ansatz (29) aufweist, der gegen die Anlagefläche (25) gedrückt wird, wenn sich der Riegel (13) in seiner Rückhalteposition befindet, und der in der Gleitführung (26) positioniert ist, wenn sich der Riegel (13) in seiner Freigabeposition befindet.

11. Kompressionsvorrichtung nach einem der vorhergehenden Ansprüche, **dadurch gekennzeichnet, dass** der Riegel (13) bezüglich des Gleithalters (11) schwenkbar gelagert ist, wobei der Übergang aus der Rückhalteposition in die Freigabeposition des Riegels (13) durch Schwenkung bewirkt wird.

12. Kompressionsvorrichtung nach einem der vorhergehenden Ansprüche, **dadurch gekennzeichnet, dass** der Riegel (13) eine Betätigungslasche (30) aufweist, und dadurch, dass der Umreifungsgurt (4) an dieser Betätigungslasche (30) anliegend angeordnet ist, die dazu eingerichtet ist, beim Spannen des Umreifungsgurtes (4) den Riegel (13) in Richtung seiner Freigabeposition zu ziehen.

13. Kompressionsvorrichtung nach einem der vorhergehenden Ansprüche, **dadurch gekennzeichnet, dass** das elastische Element (19) mindestens eine Feder aufweist, die zwischen dem Spannwagen (13) und dem Gleithalter (11) angeordnet ist.

14. Kompressionsvorrichtung nach einem der vorhergehenden Ansprüche, **dadurch gekennzeichnet, dass** der Umreifungsgurt (4) eine feste Schleife (31) und eine verstellbare Schleife (32) aufweist, wobei die eine um das erste Befestigungsendstück (16) herum angeordnet ist und die andere um das zweite Befestigungsendstück (23) herum angeordnet ist.

15. Prismatisches elektrochemisches Speichermodul, welches mindestens eine Speicherzelle (7), eine Spannplatte (3) auf jeder von zwei gegenüberliegenden Seiten des Speichermoduls und eine Kompressionsvorrichtung nach einem der Ansprüche 1 bis 14 aufweist.

16. Verfahren zur Anbringung einer Kompressionsvorrichtung nach einem der Ansprüche 1 bis 14, **dadurch gekennzeichnet, dass** es einen vorausgehenden Schritt des Verschiebens des Spannwagens (12) entgegen der Wirkung des elastischen Elements (19) und des Positionierens des Riegels (13) in der Rückhalteposition umfasst.

17. Verfahren nach Anspruch 16, **dadurch gekennzeichnet, dass** es außerdem die folgenden Schritte umfasst:
- Spannen des Umreifungsgurtes (4) durch Ziehen an einem freien Ende (35) einer verstellbaren Schleife (32);
- Übergang des Riegels (13) aus seiner Rückhalteposition in seine Freigabeposition durch Drücken des Umreifungsgurtes (4) auf den Riegel (13);
- kalibriertes Spannen des Umreifungsgurtes (4) durch die Verschiebung des Spannwagens (12) unter der Wirkung des elastischen Elements (19).

18. Verfahren nach Anspruch 17, **dadurch gekennzeichnet, dass** im Schritt des kalibrierten Spannens der Spannwagen (12) eine Gleichgewichtsposition einnimmt, in der die Spannung des Umreifungsgurtes (4) der resultierenden Kraft des elastischen Elements (19) entspricht.

19. Verfahren nach Anspruch 17, **dadurch gekennzeichnet, dass** im Schritt des kalibrierten Spannens der Spannwagen (12) und der Riegel (13) an einem Anlageende (40) zur Anlage aneinander kommen.

## Claims

1. Containment device for a prismatic electrochemical accumulator module, this device comprising a binding strap (4) and a tightening mechanism (5), **characterized in that** the tightening mechanism (5) comprises:
- a sliding support (11) which comprises a first fastening terminal (16) to which a first end (8) of the binding strap (4) is fastened;
- a tightening carriage (12) mounted so as to be movable on the sliding support (11), in a sliding direction, and comprising a second fastening terminal (23) to which a second end (9) of the binding strap (4) is fastened;
- an elastic element (19) urging the tightening carriage (12) towards the first fastening terminal (16);
- a lock (13) designed to occupy: a retaining position in which the lock (13) keeps the tightening carriage (12) at a predetermined distance from the fastening terminal (16), counter to the elastic element (19); and a release position in which the lock (13) releases the tightening carriage (12).

2. Containment device according to Claim 1, **characterized in that** the sliding support (11) comprises at least one cylindrical profile (18) extending in the sliding direction, and **in that** the tightening carriage (12) comprises at least one slider (21) in sliding connection with this cylindrical profile (18).

3. Containment device according to either of the preceding claims, **characterized in that** the sliding support (11) comprises at least one rod (15) which extends transversely to the sliding direction and which forms the first fastening terminal (16), the binding strap (4) forming a loop around the rod (15).

4. Containment device according to one of the preceding claims, **characterized in that** the tightening carriage (12) comprises at least one bar (22A, 22B) which extends transversely to the tightening direction and which forms the second fastening terminal (23), the binding strap (4) forming a loop around the bar (22A, 22B).

5. Containment device according to one of the preceding claims, **characterized in that** the tightening carriage (12) comprises at least one bearing surface (25) which is substantially perpendicular to the tightening direction, the lock (13) retaining the tightening carriage (12) by this bearing surface (25) when it is in its retaining position.

6. Containment device according to one of the preceding claims, **characterized in that** it comprises a slideway (26) extending in the tightening direction, the tightening carriage (12) being movable along this slideway (26) when the lock (13) is in its release position.

7. Containment device according to Claim 6, **characterized in that** the slideway (26) comprises a bearing end (39) designed to limit the travel of the tightening carriage (12) in the direction of mutual distancing between the first fastening terminal (16) and the second fastening terminal (23) when the lock (13) is in its release position.

8. Containment device according to either of Claims 6 and 7, **characterized in that** the slideway (26) comprises a bearing end (40) designed to limit the travel of the tightening carriage (12) in the direction of mutual approach between the first fastening terminal (16) and the second fastening terminal (23) when the lock (13) is in its release position.

9. Containment device according to one of Claims 6 to 8 when they are dependent on Claim 5, **characterized in that** the tightening carriage (12) comprises at least one side part (24) comprising a slot defining the bearing surface (25) and the slideway (26).

10. Containment device according to one of Claims 6 to 9 when they are dependent on Claim 5, **characterized in that** the lock (13) comprises a cleat (29) which bears against the bearing surface (25) when the lock (13) is in its retaining position, and which is positioned in the slideway (26) when the lock (13) is in its release position.

11. Containment device according to one of the preceding claims, **characterized in that** the lock (13) is mounted pivotably with respect to the sliding support (11), the passage from the retaining position to the release position of the lock (13) being achieved by pivoting.

12. Containment device according to one of the preceding claims, **characterized in that** the lock (13) comprises an actuating tab (30), and **in that** the binding strap (4) is arranged against this actuating tab (30), which is designed to drive the lock (13) towards its release position during the tightening of the binding strap (4).

13. Containment device according to one of the preceding claims, **characterized in that** the elastic element (19) comprises at least one spring arranged between the tightening carriage (13) and the sliding support (11).

14. Containment device according to one of the preceding claims, **characterized in that** the binding strap (4) comprises a fixed loop (31) and an adjustable loop (32), one being arranged around the first fastening terminal (16) and the other being arranged around the second fastening terminal (23).

15. Prismatic electrochemical accumulator module comprising at least one accumulator cell (7), a clamping plate (3) on each of two opposite faces of the accumulator module, and a containment device according to one of Claims 1 to 14.

16. Method for placing a containment device according to one of Claims 1 to 14, **characterized in that** it comprises a preliminary step of moving the tightening carriage (12) counter to the elastic element (19) and of positioning the lock (13) in the retaining position.

17. Method according to Claim 16, **characterized in that** it further comprises the following steps:
- tightening of the binding strap (4) by pulling on a free end (35) of an adjustable loop (32);
- passage of the lock (13) from its retaining position to its release position by pressing of the binding strap (4) on the lock (13);
- calibrated tightening of the binding strap (4) by the movement of the tightening carriage (12) under the effect of the elastic element (19).

18. Method according to Claim 17, **characterized in that**, during the calibrated tightening step, the tightening carriage (12) assumes a position of equilibrium in which the tightening of the binding strap (4) corresponds to the force resulting from the elastic element (19).

19. Method according to Claim 17, **characterized in that**, during the calibrated tightening step, the tightening carriage (12) and the lock (13) butt against one another on a bearing end (40).
